# EUROPÄISCHE PATENTSCHRIFT

(11) **EP 3 334 681 B1**
(45) Veröffentlichungstag und Bekanntmachung des Hinweises auf die Patenterteilung: **24.10.2018**
(21) Anmeldenummer: 16756570.4
(22) Anmeldetag: 22.07.2016
(51) Int. Cl.: B67D 1/08, B67D 1/12

(54) **FITTING FÜR GETRÄNKEFASS MIT ÜBERDRUCKFUNKTION**
FITTING FOR A CASK HAVING AN OVERPRESSURE FUNCTION
RACCORD MUNI D'UNE FONCTION DE SURPRESSION POUR RÉCIPIENTS À BOISSONS

(30) Priorität: 13.08.2015 DE 102015113387
(43) Veröffentlichungstag der Anmeldung: 20.06.2018
(73) Patentinhaber: DSI Getränkearmaturen GmbH, 59069 Hamm-Rhynern (DE)
(72) Erfinder: STEINMETZ, Harald, 59078 Aachen (DE); SOMMER, Philipp, 59556 Lippstadt (DE); WOLTER, Mirco, 59227 Ahlen (DE)
(74) Vertreter: Osterhoff, Utz
(86) Internationale Anmeldenummer: PCT/DE2016/100330
(87) Internationale Veröffentlichungsnummer: WO 2017/025080

(56) Entgegenhaltungen:
- EP-A1- 1 921 039
- WO-A1-91/00240
- WO-A1-99/14156
- WO-A2-2008/138335
- DE-A1- 19 958 958
- US-A- 4 509 663

## Beschreibung

Die vorliegende Erfindung betrifft eine Fittinganordnung für ein Getränkefass gemäß den Merkmalen von Patentanspruch 1.

Die vorliegende Erfindung betrifft weiterhin ein Getränkefass mit einer Fittinganordnung gemäß den Merkmalen von Patentanspruch 7.

Aus dem Stand der Technik ist es bekannt, Getränke zum Verzehr in Behältnissen zu bevorraten. Dies ermöglicht den Transport von der Getränkeerzeugung, beispielsweise einem Brauereibetrieb, bis zum Ort des Verzehrs.

Übliche Behältnisse für Getränke sind Flaschen sowie Getränkefässer. Letzterenfalls ist es möglich, größere Mengen des jeweiligen Getränkes, beispielsweise mehr als 10 Liter, insbesondere mehr als 20 Liter und bevorzugt mehr als 30 Liter des Getränkes in einem Getränkefass bereitzustellen.

Um nunmehr das Getränk aus dem Getränkefass zu extrahieren, ist es entweder möglich, in einem unteren Bereich des Getränkefasses dieses anzuzapfen, so dass insbesondere aufgrund der Schwerkraft das Getränk aus dem Getränkefass entnommen werden kann.

Aus dem Stand der Technik ist es jedoch weiterhin bekannt, unter Zuhilfenahme insbesondere eines Gases das Getränk unter Druck aus dem Getränkefass zu zapfen. Hierzu wird insbesondere CO2 verwendet. Die Getränkefässer weisen dazu heutzutage einen Fasskörper an sich, mithin die äußere Hülle auf, wobei in dem Fasskörper zumeist mittig an seiner Oberseite ein Fitting angeordnet ist, der einen Anschluss an eine Zapfanlage zum Eindringen von Gas und Herausbefördern des Getränkes ermöglicht. Hierzu werden Zapfköpfe auf den Fittingzapfkopfanschluss des Getränkefasses, insbesondere mit dem Fitting, formschlüssig und fluiddicht gekoppelt.

Bei der Lagerung, Bevorratung und/oder dem Transport des Getränkefasses kann nachfolgend beschriebenes Szenario entstehen. In dem Abfüllbetrieb wird das Getränkefass mit dem jeweiligen Getränk befüllt. Das Fass soll im Abfüllbetrieb nahezu vollständig gefüllt werden. Dieser Abfüllvorgang findet bei Temperaturen knapp über 0°C, insbesondere bei einer Getränketemperatur von ca. 2°C bis 3°C statt. Wird ein solches Getränkefass transportiert, so können beispielsweise auf dem Transportweg unter einer LKW Plane Temperaturen von mehr als 50, 60 oder gar 70°C in dem Getränkefass entstehen. Dies sorgt dafür, dass der innere Druck in dem Getränkefass ansteigt und im ungünstigsten Fall sogar einen zulässigen Druck des Getränkefasses übersteigt. In der Folge würde das Getränkefass bei solchen Temperaturen bleibend (plastisch) verformen und damit beschädigt sein oder gar bersten. Insbesondere wenn nach der Abfüllung kein ausreichendes Gaspolster als Puffer mehr vorhanden ist. Damit dies nicht geschieht, gibt es verschiedene Überdruckfunktionen in einem Fitting. So ist beispielsweise aus der WO 99/14156 A, welche die technischen Merkmale des einleitenden Teils des Anspruchs 1 offenbart, eine Fassdichtung bekannt, bei der in einem elastischen Material ein Schneidring angeordnet ist, so dass im Falle eines Überdruckes der gesamte Dichtkörper für einen Teil aus dem Fitting herausrutscht. An dem Dichtkörper sind weiterhin Öffnungen vorgesehen, so dass ein Überdruck des Getränkefasses in die Umgebung entweichen kann.

Ferner ist beispielweise aus der US 5,595,208 B eine Fassdichtung bekannt, bei der ein Stanzring in einem elastischen Dichtkörper eingearbeitet ist, so dass im Falle eines Überdruckes ein Teil des Dichtkörpers ausgestanzt wird und an die Umgebung heraustritt.

Aufgabe der vorliegenden Erfindung ist es, ausgehend vom Stand der Technik eine Fassdichtung aufzuzeigen, welche eine sehr gute Auslösefunktion im Falle eines Überdruckes aufweist, zugleich jedoch die Betriebssicherheit gerade im Bereich des Fittings weiter steigert.

Die zuvor genannte Aufgabe wird mit einer Fittinganordnung für ein Getränkefass gemäß den Merkmalen im Patentanspruch 1 gelöst.

Die zuvor genannte Aufgabe wird weiterhin bei einem Getränkefass mit einer Fittinganordnung gemäß den Merkmalen im Patentanspruch 7 gelöst. Vorteilhafte Ausgestaltungsvarianten der vorliegenden Erfindung sind in den abhängigen Patentansprüchen beschrieben.

Die Fittinganordnung für ein Getränkefass weist eine Fittinghülse mit darin angeordnetem, federelastisch relativbewegbarem Steigrohr auf. Die Fittinghülse weist eine kegelförmig verlaufende, sich zu einem oberen Ende verjüngende innenliegende Dichtfläche auf, wobei zwischen innenliegender Dichtfläche und oberem Ende des Steigrohres eine Dichtung eingegliedert ist und das Steigrohr aufgrund einer Federkraft mit der Dichtung gegen die Dichtfläche gedrückt ist und die Dichtung innenseitig in dem oberen Ende des Steigrohrs angeordnet ist. In dem oberen Ende des Steigrohres selbst ist federelastisch relativbeweglich ein Dichtkörper angeordnet, der in einer Innendichtfläche der Dichtung aufgrund einer Federkraft formschlüssig zur Anlage kommt. Die Dichtung selbst weist einen inneren Verstärkungsring auf, welcher von einem elastischen Dichtungsmaterial umgeben ist. Erfindungsgemäß zeichnet sich die Fittinganordnung dadurch aus, dass der Verstärkungsring an seiner Außenmantelfläche eine Materialaussparung aufweist, so dass der Abstand von Verstärkungsring zu innenliegender Dichtfläche der Fittinghülse im Bereich der Materialaussparung vergrößert ist.

Durch das Steigrohr ergibt sich bei der an einem Getränkefass montierten Fittinganordnung innerhalb des Steigrohres selbst eine Getränkeseite und zwischen Steigrohr und Fittinghülse eine Gasseite. In Folge eines innerhalb des Getränkefasses entstehenden Überdruckes liegt der gleiche Druck sowohl auf der Getränkeseite als auch auf der Gasseite innerhalb des Getränkefasses an. Aufgrund der Materialaussparung ist ein größerer Teil des elastischen Dichtungsmaterials diesem erhöhten Druck ausgesetzt. In der Folge wird das elastische Dichtungsmaterial in Richtung der Umgebung aus dem Getränkefass gedrückt und verformt sich elastisch. Diese elastische Deformation erfolgt so lange, bis ein Fluidkanal zwischen innenliegender Dichtfläche und Dichtung geöffnet ist, woraufhin der Überdruck an die Umgebung entweichen kann. Dies erfolgt bei der vorliegenden Erfindung insbesondere von der zwischen Steigrohr und Fittinghülse befindlichen Gasseite.

Die Fittinganordnung weist somit nachfolgend aufgezählte Vorteile gegenüber aus dem Stand der Technik bekannten Dichtungsanordnungen auf. Die Überdruckfunktion erfolgt reversibel, dies bedeutet, dass die Dichtung nicht in Folge eines Überdruckes zerstört wird.

Das Entweichen des Überdruckes erfolgt aus dem Getränkefass von der Gasseite her. Es wird somit vermieden, dass ein Fluidstrahl in Folge des Überdruckes austritt. Sollte dies beispielsweise beim manuellen Verladen der Getränkefässer erfolgen, besteht somit nicht die Gefahr, dass ein Monteur von dem austretenden Fluidstrahl getroffen wird. Nach Entweichen des Überdruckes verschließt sich die Dichtung wiederum zumindest teilweise selbstständig. Der kritische Überdruck wird abgebaut, das in dem Getränkefass vorhandene Getränk kann jedoch unter Umständen noch einer weiteren Verwendung zugeführt werden. Die Dichtung sowie die gesamte Fittinganordnung bleiben im Übrigen in ihrer ordnungsgemäßen Gebrauchsposition. Dies bedeutet gerade, dass der Verstärkungsring von dem Dichtkörper umfasst bleibt und ein Herausschießen des Dichtkörpers und/oder der Dichtung des Steigrohres konstruktiv verhindert ist. Somit ist die Betriebssicherheit der Verwendung einer erfindungsgemäßen Fittinganordnung deutlich erhöht, wobei gleichzeitig die Überdruckfunktion sichergestellt ist und über längere Zeit erhalten bleibt.

Bevorzugt ist der Dichtkörper als Kugel ausgebildet, wobei der Verstärkungsring einen sich radial nach innen verjüngendem Innendurchmesser aufweist, so dass der Innendurchmesser des Verstärkungsringes an einem oberen Ende kleiner ist als der Durchmesser der Kugel.

Eine Innenmantelfläche des Verstärkungsringes ist insbesondere zumindest abschnittsweise hemisphärisch, insbesondere jedoch radial vollumlaufend ausgebildet. Dies bedeutet, der Dichtkörper in Form einer Kugel ist umlaufend von allen Seiten überdeckt. Bevorzugt ist dadurch ein Innendurchmesser des Verstärkungsringes kleiner als der Durchmesser der Kugel selbst. Gerade dies verhindert ein Herausdrücken bzw. Herausschießen der Kugel im Falle eines Überdruckes. Ein Überdruckabbau von dem Steigrohr heraus, mithin aus der Getränkeseite, wird somit vermieden.

In einer weiteren bevorzugten Ausgestaltungsvariante weist die Dichtung in Einbaulage einen oberen Kopfabschnitt und einen sich davon erstreckenden unteren Stegabschnitt auf. Der Kopfabschnitt verjüngt sich in Einbaulage nach oben. Der Kopfabschnitt kommt somit an einer Außenmantelfläche formschlüssig und fluiddicht an der innenliegenden Dichtfläche des Fittinggehäuses zur Anlage. An einer Innenmantelfläche der Dichtung kommt der Dichtkörper insbesondere in Form einer Kugel formschlüssig und fluiddicht zur Anlage. Der Dichtkörper ist insbesondere als A-, G-, S-, D-, M- oder U-System ausgebildet, besonders bevorzugt als D-System.

Der Verstärkungsring in der Dichtung ist insbesondere aus einem harten, wenig elastisch verformbaren Werkstoff ausgebildet. Insbesondere wird hierzu ein metallischer Werkstoff verwendet, bevorzugt aus korrosionsbeständigem Stahl, insbesondere aus Edelstahl.

Das elastische Dichtungsmaterial, welches zumindest teilweise, insbesondere vollständig den Verstärkungsring einfasst, ist bevorzugt aus einem elastisch verformbaren kunststoffartigem Werkstoff und/oder gummiartigem Werkstoff ausgebildet. Besonders bevorzugt wird ein elastomerer Werkstoff verwendet.

Bevorzugt handelt es sich hier um Mischungen auf den Polymerbasen NBR, EPDM oder FKM, insbesondere mit Materialhärten zwischen 75 bis 95 Shore-A, lebensmittelkonformen Bestandteilen und Beständigkeiten gegen marktübliche Reinigungs- und Desinfektionsmedien im Bereich der Getränkefässer.

Insbesondere ist der elastisch verformbare Werkstoff mit dem Verstärkungsring gekoppelt, besonders bevorzugt stoffschlüssig. Insbesondere beim Herstellungsvorgang kann dabei das elastisch verformbare Dichtungsmaterial mit dem Verstärkungsring verklebt werden und/oder auf diesen aufvulkansiert werden. Bevorzugt erfolgt dies durch Reinigung des Verstärkungsringes mit einem haftvermittelnden Primer und nachträglichem Umspritzen bzw. Umgießen mit dem elastisch verformbaren Dichtungsmaterial.

An dem Verstärkungsring selbst ist die Materialaussparung als abgeschrägte Fläche ausgebildet oder auch als Nut mit zumindest teilweise abgeschrägter Fläche in der Außenmantelfläche ausgebildet. Als weitere Alternative kann die Aussparung als Kerbe ausgebildet sein. Die abgeschrägte Fläche weist einen ebenen Verlauf auf oder kann jedoch auch selbst gekrümmt ausgebildet sein und somit dem Verlauf der Außenmantelfläche folgend eine nach außen gekrümmte Krümmung bzw. Wölbung aufweisen.

Weiterhin besonders bevorzugt sind in einer Mantelfläche der Fittinghülse, insbesondere in einer in dem Getränkefass angeordneten Mantelfläche der Fittinghülse, Ausnehmungen vorgesehen. Das Steigrohr ist im Bereich seines oberen Endes in seinem Durchmesser aufgeweitet, wobei insbesondere die Dichtung besonders bevorzugt mit dem Stegabschnitt in dem aufgeweiteten Ende formschlüssig und/oder reibschlüssig aufgenommen ist, besonders bevorzugt mit einem Presssitz. Das Ende des Steigrohres ist aufgeweitet bzw. aufgetulpt. Weiterhin besonders bevorzugt ist ein Außendurchmesser des Steigrohres und insbesondere des in der Dichtung befindlichen Verstärkungsrings größer als ein Innendurchmesser der innenliegenden Dichtfläche der Fittinghülse. Auch dies verhindert wiederum ein Herausspringen und/oder Herausgleiten des Steigrohres aus der Fittinghülse im Falle eines Überdruckes.

Weiterer Bestandteil der vorliegenden Erfindung ist ein Getränkefass ausgerüstet mit einer zuvor beschriebenen Fittinganordnung, wobei das Getränkefass mindestens teilweise, bevorzugt vollständig mit einem Getränk befüllt ist. Im Falle des vollständigen Füllens ist ein Ausgleichsvolumen mit kompressiblem Fluid im Form eines Gases mitunter eine vollständige Füllen zu verstehen. Erfindungsgemäß zeichnet sich das Getränkefass dadurch aus, dass im Falle eines Überdruckes ein Teil des elastischen Dichtungskörpers im Bereich der Materialaussparung elastisch nach außen deformiert wird, so dass der Überdruck an die Umgebung entweicht.

Insbesondere ist zwischen Steigrohr und Fittinghülse eine Gasseite innerhalb des Getränkefasses ausgebildet, in welcher ein Sicherheitsvolumen eines kompressiblen Fluides, insbesondere eines Gases vorhanden ist, wobei der Überdruck auf der Gasseite aus dem Getränkefass entweicht. Die Überdruckfunktion kann auch als Druckentlastung bezeichnet werden. Diese löst insbesondere bei einem Innendruck in dem Getränkefass zwischen 30 bar und 35 bar bei Raumtemperatur, mithin bei 20°C bzw. 25°C, aus. Mithin wird das elastische Dichtungsmaterial nach außen deformiert. Bei erhöhter Temperatur, mithin beispielsweise bei 50°C, wird auch das elastische Dichtungsmaterial weicher, so dass die Druckentlastung bei ca. 30 bar auslöst. Die Fittinganordnung kann jedoch auch so ausgelegt werden, dass die Druckentlastung bereits bei 20 bar auslöst. Bevorzugt wird weiterhin das System derart ausgelegt, dass bei Erreichen eines Differenzdruckes unterhalb des Druckes der Auslösung der Druckentlastung liegt, wieder verschließt. Bevorzugt liegt der Differenzdruck bei 1 bar bis 20 bar, bevorzugt 2 bar bis 15 bar, insbesondere 5 bar bis 12 bar und ganz besonders bevorzugt 10 bar unterhalb des Auslösedruckes der Druckentlastung. So löst beispielsweise die Druckentlastung bei 32 bar aus, verschließt diese wiederum bei ca. 22 bar.

Das Verfahren zum Betreiben des Getränkefasses schließt dann das Auslösen der Dichtung in Folge eines Überdruckes ein. Dies geschieht jedoch in der Regel nur durch äußere Einwirkung in das Getränkefass, insbesondere durch Temperatureinwirkung. Der Vorteil liegt darin, dass bei Druckanstieg das elastische Dichtungsmaterial ausschließlich elastisch verformt und somit keine plastische oder sonstige zerstörungsbehaftete Deformation erfährt. Insbesondere ist die Dichtung vollständig reversibel. Bevorzugt ist die Dichtung in Folge eines Überdruckes wiederum mehrfach einsetzbar.

Weitere Vorteile, Merkmale und Eigenschaften der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: eine Explosivdarstellung einer erfindungsgemäßen Fittinganordnung,
- Figur 2: die Fittinganordnung im Zusammenbau in Querschnittsansicht,
- Figur 3: eine Vergrößerung gemäß Figur 2,
- Figur 4: die Vergrößerungsansicht gemäß Figur 2 im Falle eines Überdruckes,
- Figur 5a bis f: verschiedene Perspektiv- und Draufsichten von erfindungsgemäßen Verstärkungsringen und
- Figur 6a bis c: eine bevorzugte Ausführungsvariante eines Verstärkungsringes mit Positionierungshilfen.

In den Figuren werden für gleiche oder ähnliche Bauteile dieselben Bezugszeichen verwendet, auch wenn eine wiederholte Beschreibung aus Vereinfachungsgründen entfällt.

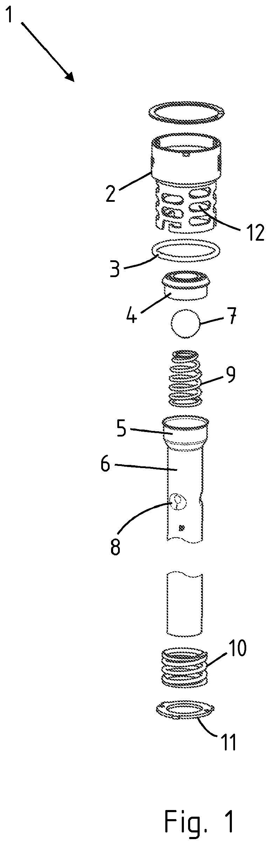

In Figur 1 ist die Fittinganordnung 1 dargestellt in einer Explosivansicht. Eine Fittinghülse 2 weist einen äußeren Dichtring 3 auf, um in einem nicht näher dargestellten Getränkefass fluiddicht angeordnet zu werden. In der Fittinghülle 2 ist die Dichtung 4 angeordnet, welche in ein oberes Ende 5 eines Steigrohres 6 formschlüssig fluiddicht eingesetzt ist. Hierzu ist ein Dichtkörper in Form einer Kugel 7 mit einer Schraubendruckfeder 9 eingesetzt, so dass die Kugel 7 an eine Innendichtfläche der Dichtung 4 entgegen einer Federkraft formschlüssig zur Anlage gebracht wird. Hierzu sind in das Steigrohr 6 gerichtete Wölbungen 8 ausgebildet, welche die Schraubendruckfeder 9 formschlüssig in dem Steigrohr 6 halten. Weiterhin ist eine das Steigrohr 6 umfassende Schraubendruckfeder 10 sowie ein Haltering 11 angeordnet, welche das gesamte Steigrohr 6 von innen in die Fittinghülse 2 drücken. Ferner weist die Fittinghülse 2 Ausnehmungen 12 in ihrer Mantelfläche auf.

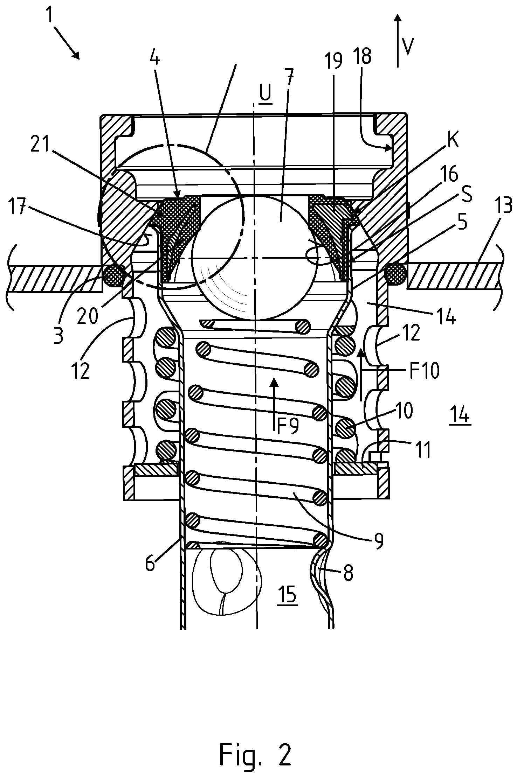

Figur 2 zeigt eine Querschnittsansicht durch eine zusammengesetzte Fittinganordnung 1, wobei die Fittinganordnung 1 in ein Getränkefass 13 eingesetzt ist. Hierzu ist in dem Getränkefass 13 selbst eine Gasseite 14 ausgebildet sowie in dem Steigrohr 6 selber sowie unterhalb der Fittinganordnung 1 eine Getränkeseite 15, sofern das Getränkefass 13 auf die Vertikalrichtung V bezogen nach oben ausgerichtet ist. Insbesondere ist die Gasseite 14 zwischen Fittinghülse 2 und Steigrohr 6 ausgebildet, was durch die Ausnehmungen 12 in der Fittinghülse 2 realisiert ist. Im verschlossenen Dichtzustand drückt somit die Federkraft F9 die Kugel 7 gegen eine Innendichtfläche 16 der Dichtung 4. Ein auf der Getränkeseite 15 vorhandenes Getränk wird somit an einem Austritt an die Umgebung U gehindert.

Das obere Ende 5 des Steigrohres 6 ist aufgeweitet, wobei hier die zweite Schraubendruckfeder 10 formschlüssig zur Anlage kommt und das gesamte Steigrohr 6 entgegen einer Federkraft F10 mit der Dichtung 4 an eine innenliegende Dichtfläche 17 der Fittinghülse 2 drückt. Auch hierdurch ist im verschlossenen Zustand das Getränk von der Gasseite 14 her gegenüber der Umgebung U abgedichtet.

Im Falle einer Aktivierung würde ein nicht näher dargestellter Zapfkopf in eine Zapfkopfaufnahme 18 formschlüssig eingesetzt werden und das Steigrohr 6 mit Dichtung 4 auf die Vertikalrichtung V bezogen nach unten drücken. Hierdurch würde ein Gas über die Gasseite 14 in das Getränkefass 13 befördert werden, so dass wiederum beim Zapfvorgang die Kugel 7 auf die Vertikalrichtung V bezogen gegenüber der Dichtung 4 nach unten bewegt wird und somit das Getränk ausströmen kann und aus dem Getränkefass 13 entnommen wird.

Die Dichtung 4 selbst ist aus einem Verstärkungsring 19 sowie einen dieses umgebende elastische Dichtungmaterial 20 ausgebildet. Erfindungsgemäß ist vorgesehen, dass der Verstärkungsring 19 eine Materialaussparung 21 aufweist. Die Dichtung 4 weist einen oben liegenden Kopfabschnitt K und einen Stegabschnitt S auf.

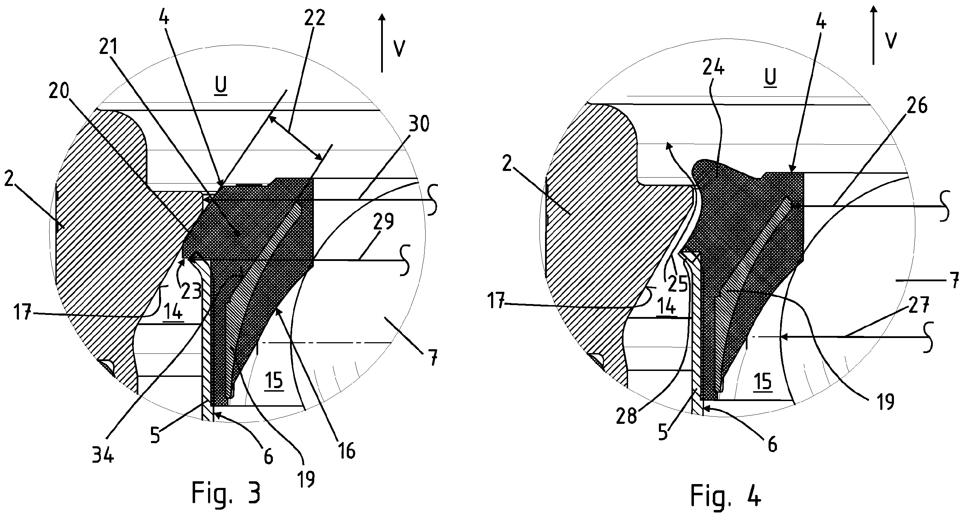

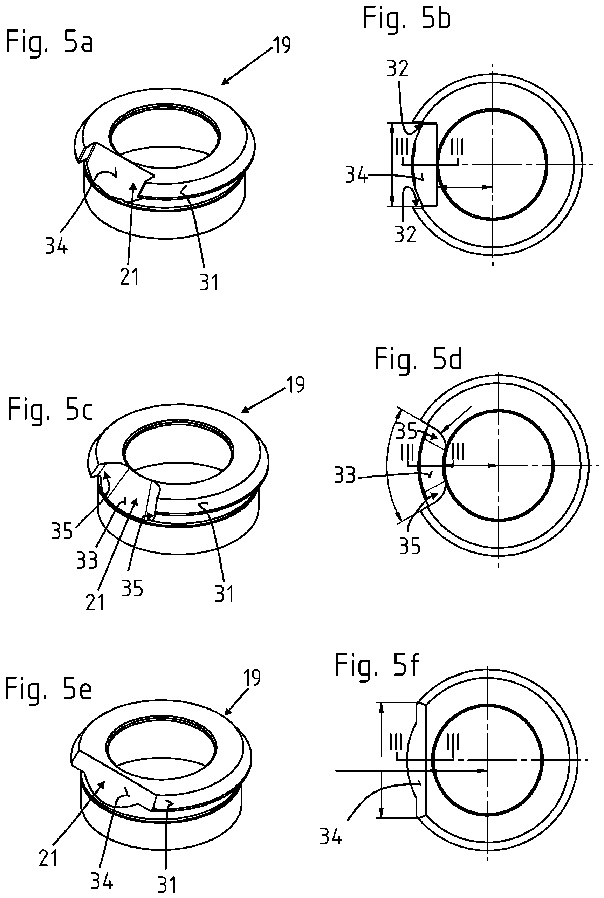

Besser dargestellt ist dies vergrößert in Figur 3. Hier ist gut zu erkennen, dass durch die Materialaussparung 21 der Abstand 22 zwischen dem Verstärkungsring 19 und der innenliegende Dichtfläche 17 der Fittinghülse 2 vergrößert ist. Eine abgeschrägte Fläche 34 des Verstärkungsringes 19 weist somit einen Abstand 22 zu der innenliegenden Dichtfläche 17 auf. Die abgeschrägte Fläche 34 kann in Einbaulage parallel zu der innenliegenden Dichtfläche 17 verlaufen, zumindest in der Darstellung gemäß Figur 3, welche einen Querschnitt der jeweiligen Schnittlinie III-III von den Figuren 5b, 5d und 5f zeigt. Im Falle einer gekrümmt verlaufenden Fläche 33 von Figur 5d wäre der Abstand 22 zwischen Fläche 33 und innenliegender Dichtfläche 17 nachfolgend, mithin teilweise in die Bildebene von Figur 3 hinein und aus der Bildebene von Figur 3 heraus annähernd gleichbleibend. Bei den Ausgestaltungsvarianten gemäß Figur 5b und 5f mit einer ebenen Fläche 34 verringert sich der Abstand 22 bezogen auf die Figur 3 in die Bildebene hinein und aus der Bildebene heraus. Es ändert sich dann ferner auch der Winkel, mit welchem die Fläche 34 und die innenliegende Fläche 17 zueinander verlaufen. Im Sinne der Erfindung ist es jedoch auch möglich, dass die Fläche 34 und die innenliegende Dichtfläche 17 gemäß Figur 3 nicht parallel zueinander verlaufen, sondern in einem Winkel zueinander.

Durch die Materialaussparung 21 ist es möglich, dass von der Gasseite 14 her ein Überdrück an einer Angriffsfläche 23 des elastischen Dichtungsmaterials 20 anliegt. Dadurch, dass der formstabile Verstärkungsring 19 hier aufgrund der Materialaussparung 21 nicht in dem Maße vorhanden ist, ist es möglich, dass im Falle des anliegenden Überdruckes ein Teil 24 des elastischen Materials 20 derart nach außen gedrückt wird, dass sich ein Fluidpfad 25 zum Entweichen des Überdrucks bildet, was in Figur 4 dargestellt ist. Dieser kommt von der Gasseite 14 her und kann somit an die Umgebung U zunächst unter Entspannung des im vollständig gefüllten Getränkefass 13 befindlichen Restgases erfolgen. Hierdurch kann der Überdruck unter Entspannung des Gases an die Umgebung U entweichen. Gleichzeitig wird jedoch sichergestellt, dadurch, dass das elastische Dichtungsmaterial 20 im Bereich der Materialaussparung 21 ausschließlich elastisch deformiert wird, dass die Dichtung 4 und das Steigrohr 6 sowie die Kugel 7 im Übrigen sicher in der Fittinghülse 2 verbleiben. Insbesondere ein Herausschießen der Kugel 7 in Vertikalrichtung V und/oder des Steigrohres 6 in Vertikalrichtung V wird somit vermieden.

Hierzu ist insbesondere ein Innendurchmesser 26 des Verstärkungsringes 19 kleiner ausgebildet als der Durchmesser 27 der Kugel 7. Der Innendurchmesser 26 am oberen Ende des Verstärkungsringes 19 ist radial umlaufend, so dass die Kugel 7 umlaufend vollständig, in Radialrichtung teilweise überdeckt ist und hierdurch ein Herausschießen der Kugel 7 in Vertikalrichtung V vermieden ist. Ferner ist das aufgeweitete Ende und insbesondere eine Auftulpung am Ende 28 des Steigrohres 6 einen Außendurchmesser 29 aufweisend, der größer ist als ein innenliegender Durchmesser 30 der innenliegenden Dichtfläche 17 (siehe Figur 3). Auch hierdurch wird vermieden, dass die Dichtung 4 mit dem Steigrohr 6 in Vertikalrichtung V aus der Fittinghülse 2 herausbefördert wird.

Figur 5a bis f zeigen verschiedene Perspektivansichten sowie Draufsichten auf den erfindungsgemäßen Verstärkungsring 19 mit der jeweiligen Materialaussparung 21. Eine bevorzugte Ausgestaltungsvariante ist gemäß Figur 5e und f dargestellt, in Form einer abgeschrägten ebenen Fläche 34. Dies bedeutet, dass die gesamte Außenmantelfläche 31 mit einer ebenen Fläche 34 abgeschrägt/plan gefräst ist. Anschließend wird dieser Verstärkungsring 19 vollständig in einer Form mit dem elastischen Dichtungsmaterial umgossen bzw. umspritzt, so dass von außen der Dichtung nicht ansehbar ist, ob die Materialaussparung 21 vorhanden ist. Die Druckentlastung ist dabei unabhängig von der Einbaulage der Dichtung 4. Mithin kann die in Figur 3 dargestellte Dichtung 4 beliebig um ihre Hochachse um 360° gedreht werden. Die Druckentlastung löst immer bei Erreichen des vorgegebenen Überdruckes in dem Getränkefass.

Eine alternative Ausgestaltungsvariante, in der die ebene Fläche 34 nicht über deren gesamten Bereich abgeplant bzw. angefräst ist, sondern über zwei Seiten 32 begrenzt ist, ist in Figur 5a und b dargestellt. Es ergibt sich somit eine Aussparung in Form einer in die Außenmantelfläche 31 angefrästen Nut.

Eine weitere Ausgestaltungsvariante ist dargestellt in Figur 5c und d, bei welcher die ebene Fläche nicht als plane ebene Fläche, sondern als gekrümmte Fläche 33 ausgebildet ist. Diese ist wiederum von zwei Seiten 35 her begrenzt. Die Seiten 35 sind im Falle der gekrümmten Fläche 33 ebenfalls mit einer Krümmung versehen.

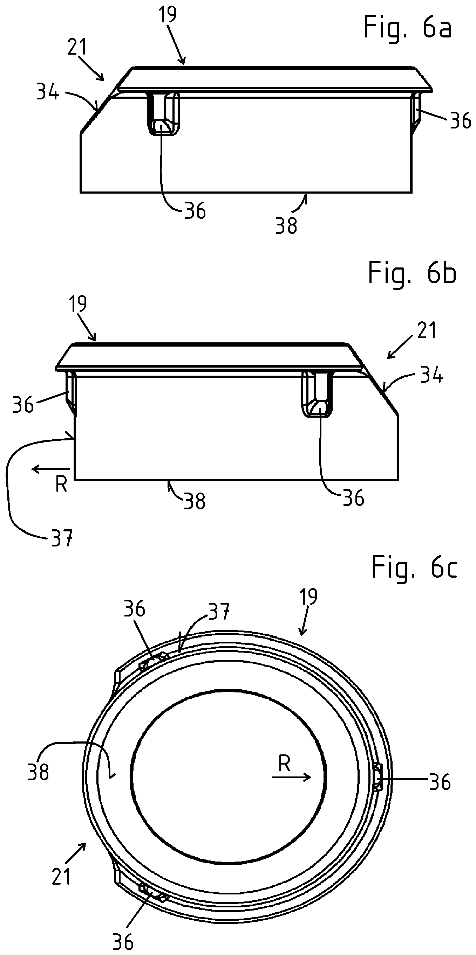

Die Figuren 6a bis c zeigen den Verstärkungsring 19 in einer bevorzugten Ausführungsvariante mit Positionierungshilfen 36. Die Positionierungshilfen 36 sind als über eine Außenmantelfläche 37 in Radialrichtung R vorstehende Nocken ausgebildet. Wird der Verstärkungsring 19 in ein Werkzeug eingelegt um anschließend mit dem elastischen Dichtungsmaterial umspritzt, beziehungsweise umgossen zu werden, so ist aufgrund der Positionierungshilfen 36 eine exakte Positionierung in dem Werkzeug möglich. Diese wäre ansonsten aufgrund der Materialaussparung 21 in Form der hier dargestellten abgeschrägten Fläche 34 erschwert, da der Verstärkungsring 19 nicht rotationssymmetrisch umlaufend ausgebildet ist.

Figur 6c zeigt eine Ansicht von unten auf die Unterseite 38. Figuren 6a und 6b zeigen jeweils eine Seitenansicht.

### Bezugszeichen:

- 1 -: Fittinganordnung
- 2 -: Fittinghülse
- 3 -: Dichtring
- 4 -: Dichtung
- 5 -: oberes Ende zu 6
- 6 -: Steigrohr
- 7 -: Dichtkörper bzw. Kugel
- 8 -: Wölbung
- 9 -: Schraubendruckfeder
- 10 -: Schraubendruckfeder
- 11 -: Haltering
- 12 -: Ausnehmung zu 2
- 13 -: Getränkefass
- 14 -: Gasseite
- 15 -: Getränkeseite
- 16 -: Innendichtfläche zu 4
- 17 -: Dichtfläche
- 18 -: Zapfkopfaufnahme
- 19 -: Verstärkungsring
- 20 -: elastisches Dichtungsmaterial
- 21 -: Materialaussparung an 19
- 22 -: Abstand
- 23 -: Angriffsfläche
- 24 -: Teil zu 20
- 25 -: Fluidpfad
- 26 -: Innendurchmesser zu 19
- 27 -: Durchmesser zu 7
- 28 -: Ende zu 5
- 29 -: Außendurchmesser zu 5
- 30 -: Durchmesser zu 17
- 31 -: Außenmantelfläche
- 32 -: Seiten
- 33 -: gekrümmte Fläche
- 34 -: abgeschrägte Fläche
- 35 -: Seite zu 33
- 36 -: Positionierungshilfen
- 37 -: Außenmantelfläche
- 38 -: Unterseite zu 19

- F9 -: Federkraft zu 9
- F10 -: Federkraft zu 10
- K -: Kopfabschnitt
- S -: Stegabschnitt
- U -: Umgebung
- V -: Vertikalrichtung
- R -: Radialrichtung

## Patentansprüche

1. Fittinganordnung (1) für ein Getränkefass (13), aufweisend eine Fittinghülse (2) mit darin angeordnetem, federelastisch relativbewegbarem Steigrohr (6), wobei die Fittinghülse (2) eine kegelförmig verlaufende, sich zu einem oberen Ende verjüngende innenliegende Dichtfläche (17) aufweist und zwischen innenliegender Dichtfläche (17) und oberem Ende (5) des Steigrohres (6) eine Dichtung (4) eingegliedert ist und das Steigrohr (6) aufgrund einer Federkraft (F10) mit der Dichtung (4) gegen die Dichtfläche (17) gedrückt ist und die Dichtung (4) innenseitig in dem oberen Ende (5) des Steigrohres (6) angeordnet ist, wobei in dem oberen Ende (5) des Steigrohres (6) federelastisch relativbeweglich ein Dichtkörper (7) angeordnet ist, der an einer Innendichtfläche (16) der Dichtung (4) aufgrund einer Federkraft (F9) formschlüssig zur Anlage kommt und die Dichtung (4) einen inneren Verstärkungsring (19) aufweist, welcher von einem elastischen Dichtungsmaterial (20) umgeben ist, und der Verstärkungsring (19) an seiner Außenmantelfläche (31) eine Materialaussparung (21) aufweist, so dass der Abstand (22) von Verstärkungsring (19) zu innenliegender Dichtfläche (17) der Fittinghülse (2) vergrößert ist, **dadurch gekennzeichnet, dass** die Materialaussparung (21) als abgeschrägte Fläche (34) ausgebildet ist oder dass die Materiafaussparung (21) als Nut mit zumindest teilweise abgeschrägter Fläche (34, 33) ausgebildet ist, und dass die abgeschrägte Fläche (34) einen ebenen Verlauf aufweist oder dass die abgeschrägte Fläche (33) einen gekrümmten Verlauf aufweist, dergestalt, dass im Falle eines Überdruckes ein Teil (24) des elastischen Dichtungsmaterials (20) im Bereich der Materialausparung (21) elastisch reversibel nach außen deformiert und der Teil (24) nach Auslösen der Überdruckfunktion in seine Ausgangsposition rückführbar ist.

2. Fittinganordnung nach Anspruch 1, **dadurch gekennzeichnet, dass** der Dichtkörper (7) eine Kugel (7) ist und der Verstärkungsring (19) einen sich radial nach innen verjüngenden innendurchmesser (26) aufweist, wobei der Innendurchmesser (26) mindestens an einem oberen Ende kleiner ist als der Durchmesser (27) der Kugel (7).

3. Fittinganordnung nach Anspruch 1 oder 2, **dadurch gekennzeichnet, dass** die Dichtung (4) in Einbaulage einen oberen Kopfabschnitt (K) und einen sich davon erstreckenden unteren Stegabschnitt (S) aufweist, wobei der Kopfabschnitt (K) sich in Einbaulage nach oben in seiner Außenmantelfläche (31) verjüngt.

4. Fittinganordnung nach einem der Ansprüche 1 bis 3, **dadurch gekennzeichnet, dass** der Verstärkungsring (19) aus einem metallischem Werkstoff ausgebildet ist, vorzugweise aus korrosionsbeständigem Stahl, besonders bevorzugt aus Edelstahl.

5. Fittinganordnung nach einem der Ansprüche 1 bis 4, **dadurch gekennzeichnet, dass** die abgeschrägte Fläche (33) zumindest abschnittsweise parallel zu der innenliegenden Dichtfläche (17) verläuft.

6. Fittinganordnung nach einem der Ansprüche 1 bis 5, **dadurch gekennzeichnet, dass** in einer Mantelfläche der Fittinghülse (2) Ausnehmungen (12) vorgesehen sind und/oder dass das Steigrohr (6) im Bereich eines oberen Endes (5) in seinem Durchmesser aufgeweitet ist, insbesondere ist das Ende (5) des Steigrohres (6) aufgetulpt.

7. Getränkefass mit einer Fittinganordnung (1) mit den Merkmalen von mindestens Anspruch 1, wobei das Getränkefass (13) mindestens teilweise, bevorzugt vollständig mit einem Getränk befüllt ist, **dadurch gekennzeichnet, dass** im Falle eines Überdruckes ein Teil (24) des elastischen Dichtungsmaterial (20) im Bereich der Materialaussparung (21) elastisch nach außen deformiert wird, so dass der Überdruck aus dem Getränkefass (13) an die Umgebung (U) entweicht.

8. Getränkefass nach dem vorhergehenden Anspruch, **dadurch gekennzeichnet, dass** zwischen Steigrohr (6) und Fittinghülse (2) eine Gasseite (14) innerhalb des Getränkefasses (13) ausgebildet ist, so dass der Überdruck von der Gasseite (14) aus dem Getränkefass (13) entweicht.

9. Getränkefass nach einem der Ansprüche 7 oder 8, **dadurch gekennzeichnet, dass** der Teil (24) nach Auslösen der Überdruckfunktion reversibel in seine Ausgangsposition rückführbar ist.

## Claims

1. Fitting (1) for a cask (13), having a fitting sleeve (2) with spring-elastically relatively movable rising pipe (6) disposed there in, wherein the fitting sleeve (2) has a conically extending internal sealing surface (17) tapering to an upper end and between internal sealing surface (17) and upper end (5) of the rising pipe (6) is incorporated a seal (4) and the rising pipe (6) by means of a spring force (F10) is pressed with the seal (4) against the sealing surface (17) and the seal (4) disposed on the inner side in the upper end (5) of the rising pipe (6), wherein in the upper end (5) of the rising pipe (6) is disposed in a spring-elastically relatively movable manner a sealing body (7), which abuts in a form fitting manner on an interior sealing surface (16) of the seal (4) by reason of a spring force (F9) and the seal (4) has an internal reinforcing ring (19) which is surrounded by an elastic sealing material (20), and the reinforcing ring (19) has at its outer jacket surface (31) a material recess (21), so that the distance (22) from the reinforcing ring (19) to the internal sealing surface (17) of the fitting sleeve (2) is increased, **characterised in that** the material recess (21) is formed as a sloped surface (34) or that the material recess (21) is formed as groove with at least partially sloped surface (34, 33), and that the sloped surface (34) has a planar course or that the sloped surface (33) has a curved course, in such a way that in the case of an overpressure a part (24) of the elastic sealing material (20) in the region of the material recess (21) deforms to the outside in an elastically reversible manner and the part (24) after the triggering of the overpressure function can be guided back into its start position.

2. Fitting according to claim 1, **characterised in that** the sealing body (7) is a sphere (7) and the reinforcing ring (19) has an interior diameter (26) tapering radially to the inside, wherein the interior diameter (26) at least at one upper end is smaller than the diameter (27) of the sphere (7).

3. Fitting according to claim 1 or 2, **characterised in that** the seal (4) in mounted state has an upper head section (K) and a lower rib section (S) extending therefrom, wherein the head section (K) in mounted state tapers upwards in its outer jacket surface (31).

4. Fitting according to one of claims 1 to 3, **characterised in that** the reinforcing ring (19) is formed from a metallic material, preferably from corrosion-resistant steel, especially preferably from stainless steel.

5. Fitting according to one of claims 1 to 4, **characterised in that** the sloped surface (33) extends at least sectionally parallel to the internal sealing surface (17).

6. Fitting according to one of claims 1 to 5, **characterised in that** in a jacket surface of the fitting sleeve (2) cavities (12) are provided and/or that the rising pipe (6) in the region of an upper end (5) is widened in its diameter, in particular, the end (5) of the rising pipe (6) is flared.

7. Cask with a fitting (1) with the characteristics of at least claim 1, wherein the cask (13) is at least partially, preferably entirely filled with a drink, **characterised in that** in the case of an overpressure a part (24) of the elastic sealing material (20) in the region of the material recess (21) is deformed to the outside elastically, so that the overpressure escapes from the cask (13) to the environment (U).

8. Cask according to the preceding claim, **characterised in that** between rising pipe (6) and fitting sleeve (2) is formed a gas side (14) within the cask (13), so that the overpressure from the gas side (14) escapes from the cask (13).

9. Cask according to one of claims 7 or 8, **characterised in that** the part (24), after triggering of the overpressure function, can be guided back into its start position.

## Revendications

1. Ensemble de raccordement (1) pour un fût de boisson (13), présentant une douille de raccordement (2) avec un tuyau ascendant (6) disposé à l'intérieur, pouvant être déplacé de manière relative de manière élastique comme un ressort, dans lequel la douille de raccordement (2) présente une surface étanche (17) située à l'intérieur s'étendant de manière à présenter une forme conique, se rétrécissant en direction d'une extrémité supérieure et un joint d'étanchéité (4) est intégré entre une surface étanche (17) située à l'intérieur et une extrémité supérieure (5) du tuyau ascendant (6) et le tuyau ascendant (6) est poussé contre la surface étanche (17) avec le joint d'étanchéité (4) du fait d'une force élastique (F10) et le joint d'étanchéité (4) est disposé côté intérieur dans l'extrémité supérieure (5) du tuyau ascendant (6), dans lequel est disposé de manière mobile relativement de manière élastique comme un ressort dans l'extrémité supérieure (5) du tuyau ascendant (6) un corps étanche (7), qui vient en appui par complémentarité de forme au niveau d'une surface étanche interne (16) du joint d'étanchéité (4) du fait d'une force élastique (F9) et le joint d'étanchéité (4) présente une bague de renforcement (19) interne, qui est entourée par un matériau d'étanchéité élastique (20), et la bague de renforcement (19) présente, au niveau de sa surface enveloppante extérieure (31), un renfoncement de matériau (21) de sorte que l'espacement (22) entre la bague de renforcement (19) et la surface étanche (17) située à l'intérieur de la douille de raccordement (2) soit agrandi, **caractérisé en ce que** le renfoncement de matériau (21) est réalisé en tant que surface chanfreinée (34) ou que le renfoncement de matériau (21) est réalisé en tant que rainure avec une surface (34, 33) au moins en partie chanfreinée, et que la surface chanfreinée (34) présente un profil plat ou que la surface chanfreinée (33) présente un profil incurvé de telle manière que, dans le cas d'une surpression, une partie (24) du matériau d'étanchéité élastique (20) est déformée de manière élastiquement réversible vers l'extérieur dans la zone du renfoncement de matériau (21) et la partie (24) peut être ramenée dans sa position de départ après le déclenchement de la fonction de surpression.

2. Ensemble de raccordement selon la revendication 1, **caractérisé en ce que** le corps étanche (7) est une sphère (7) et la bague de renforcement (19) présente un diamètre intérieur (26) se rétrécissant radialement vers l'intérieur, dans lequel le diamètre intérieur (26) est plus petit au moins au niveau d'une extrémité supérieure que le diamètre (27) de la sphère (7).

3. Ensemble de raccordement selon la revendication 1 ou 2, **caractérisé en ce que** le joint d'étanchéité (4) présente, dans une position de montage, une section de tête (K) supérieure et une section d'entretoise (S) inférieure s'étendant à partir de celle-ci, dans lequel la section de tête (K) se rétrécit en position de montage vers le haut dans sa surface enveloppante extérieure (31).

4. Ensemble de raccordement selon l'une quelconque des revendications 1 à 3, **caractérisé en ce que** la bague de renforcement (19) est réalisée à partir d'un matériau métallique, de préférence à partir d'un acier résistant à la corrosion, de manière particulièrement préférée à partir d'acier inoxydable.

5. Ensemble de raccordement selon l'une quelconque des revendications 1 à 4, **caractérisé en ce que** la surface chanfreinée (33) s'étend au moins par endroits de manière parallèle par rapport à la surface étanche (17) située à l'intérieur.

6. Ensemble de raccordement selon l'une quelconque des revendications 1 à 5, **caractérisé en ce que** des évidements (12) sont prévus dans une surface enveloppante de la douille de raccordement (2), et/ou que le tuyau ascendant (6) est élargi dans son diamètre dans la zone d'une extrémité supérieure (5), en particulier l'extrémité (5) du tuyau ascendant (6) est renflée.

7. Fût de boisson avec un ensemble de raccordement (1) avec les caractéristiques d'au moins la revendication 1, dans lequel le fût de boisson (13) est rempli au moins en partie, de manière préférée en totalité, d'une boisson, **caractérisé en ce que**, dans le cas d'une surpression, une partie (24) du matériau d'étanchéité élastique (20) est déformée élastiquement vers l'extérieur dans la zone du renfoncement de matériau (21) de sorte que la surpression s'échappe du fût de boisson (13) dans l'environnement (U).

8. Fût de boisson selon la revendication précédente, **caractérisé en ce qu'**un côté de gaz (14) est réalisé à l'intérieur du fût de boisson (13) entre le tuyau ascendant (6) et la douille de raccordement (2) de sorte que la surpression provenant du côté de gaz (14) s'échappe du fût de boisson (13).

9. Fût de boisson selon l'une quelconque des revendications 7 ou 8, **caractérisé en ce que** la partie (24) peut être ramenée de manière réversible dans sa position de départ après le déclenchement de la fonction de surpression.
